# EUROPEAN PATENT APPLICATION

(11) **EP 3 975 512 A1**
(43) Date of publication of application: **30.03.2022**
(21) Application number: 21198234.3
(22) Date of filing: 22.09.2021
(51) Int. Cl.: H04L 41/12, H04L 41/14, H04L 41/147

(54) **PREDICTING INDUSTRIAL AUTOMATION NETWORK PERFORMANCE**

(30) Priority: 29.09.2020 US 202017037239
(71) Applicant: Rockwell Automation Technologies, Inc., Mayfield Heights, OH 44124-6188 (US)
(72) Inventor: Yu, Yi, Mayfield Heights, OH (US); Xu, Dayin, Mayfield Heights, OH (US); Hantel, Mark R., Mayfield Heights, OH (US); Zuponcic, Steven A., Mayfield Heights, OH (US)
(74) Representative: Grünecker Patent- und Rechtsanwälte PartG mbB

(57) **Abstract**

For predicting industrial automation network performance, a method generates algorithm parameters in a first standard format for a network calculus model from design data for a network implementation. The method generates the network calculus model from the algorithm parameters. The network calculus model models worst-case performance for the network implementation. The method generates model parameters in a second standard format for a network simulation model from the design data. The method generates the network simulation model from the model parameters. The network simulation model models probabilistic performance for the network implementation. The method executes the network calculus model to determine network calculus results. The method executes the network simulation model to determine network simulation results. The method determines a system policy difference between the network calculus results, the network simulation results, and the system policy. The method updates the design data based on the system policy difference.

## Description

### BACKGROUND INFORMATION

The subject matter disclosed herein relates to predicting industrial automation network performance.

### BRIEF DESCRIPTION

A method for predicting industrial automation network performance is disclosed. The method generates algorithm parameters in a first standard format for a network calculus model from design data for a network implementation. The method generates the network calculus model from the algorithm parameters. The network calculus model models worst-case performance for the network implementation. The method generates model parameters in a second standard format for a network simulation model from the design data. The method generates the network simulation model from the model parameters. The network simulation model models probabilistic performance for the network implementation. The method executes the network calculus model to determine network calculus results. The method executes the network simulation model to determine network simulation results. The method determines a system policy difference between the network calculus results, the network simulation results, and the system policy. The method updates the design data based on the system policy difference.

An apparatus for predicting industrial automation network performance is disclosed. The apparatus includes a processor and a memory storing code executable by the processor. The processor generates algorithm parameters in a first standard format for a network calculus model from design data for a network implementation. The processor generates the network calculus model from the algorithm parameters. The network calculus model models worst-case performance for the network implementation. The processor generates model parameters in a second standard format for a network simulation model from the design data. The processor generates the network simulation model from the model parameters. The network simulation model models probabilistic performance for the network implementation. The processor executes the network calculus model to determine network calculus results. The processor executes the network simulation model to determine network simulation results. The processor determines a system policy difference between the network calculus results, the network simulation results, and the system policy. The processor updates the design data based on the system policy difference.

A computer program product for predicting industrial automation network performance is disclosed. The computer program product includes a non-transitory computer readable storage medium having program code embodied therein, the program code readable/executable by a processor. The processor generates algorithm parameters in a first standard format for a network calculus model from design data for a network implementation. The processor generates the network calculus model from the algorithm parameters. The network calculus model models worst-case performance for the network implementation. The processor generates model parameters in a second standard format for a network simulation model from the design data. The processor generates the network simulation model from the model parameters. The network simulation model models probabilistic performance for the network implementation. The processor executes the network calculus model to determine network calculus results. The processor executes the network simulation model to determine network simulation results. The processor determines a system policy difference between the network calculus results, the network simulation results, and the system policy. The processor updates the design data based on the system policy difference.

### BRIEF DESCRIPTION OF THE DRAWINGS

In order that the advantages of the embodiments of the invention will be readily understood, a more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1A is a schematic block diagram of a network implementation according to an embodiment;
Figure 1B is a schematic block diagram of a network implementation according to an alternate embodiment;
Figure 1C is a schematic block diagram of a prediction system according to an embodiment;
Figure 2A is a schematic block diagram of system data according to an embodiment;
Figure 2B is a schematic block diagram of design data according to an embodiment;
Figure 2C is a schematic block diagram of model data according to an embodiment;
Figure 2D is a schematic block diagram of model parameters according to an embodiment;
Figure 2E is a schematic block diagram of algorithm data according to an embodiment;
Figure 2F is a schematic block diagram of algorithm parameters according to an embodiment;
Figure 2G is a schematic block diagram of calculation data according to an embodiment;
Figure 2H is a schematic block diagram of a heuristic guidance index according to an embodiment;
Figure 2I is a schematic block diagram of a variant instances schema according to an embodiment;
Figure 3A is a schematic block diagram of a network scheduler according to an embodiment;
Figure 3B is a block diagram of time aware scheduling according to an embodiment;
Figure 3C is a schematic flow chart diagram of predicting performance according to an embodiment;
Figure 4 is a schematic block diagram of a computer according to an embodiment,
Figure 5A is a schematic flow chart diagram of an offline network prediction method according to an embodiment;
Figure 5B is a schematic flow chart diagram of an online network prediction method according to an embodiment;
Figure 5C is a schematic flow chart diagram of a design method according to an embodiment; and
Figure 5D is a schematic flow chart diagram of a metric measurement method according to an embodiment.

### DETAILED DESCRIPTION

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. The term "and/or" indicates embodiments of one or more of the listed elements, with "A and/or B" indicating embodiments of element A alone, element B alone, or elements A and B taken together.

Furthermore, the described features, advantages, and characteristics of the embodiments may be combined in any suitable manner. One skilled in the relevant art will recognize that the embodiments may be practiced without one or more of the specific features or advantages of a particular embodiment. In other instances, additional features and advantages may be recognized in certain embodiments that may not be present in all embodiments.

These features and advantages of the embodiments will become more fully apparent from the following description and appended claims or may be learned by the practice of embodiments as set forth hereinafter. As will be appreciated by one skilled in the art, aspects of the present invention may be embodied as a system, method, and/or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present invention may take the form of a computer program product embodied in one or more computer readable medium(s) having program code embodied thereon.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of program code may, for instance, comprise one or more physical or logical blocks of computer instructions which may, for instance, be organized as an object, procedure, or function. Nevertheless, the executables of an identified module need not be physically located together but may comprise disparate instructions stored in different locations which, when joined logically together, comprise the module and achieve the stated purpose for the module.

Indeed, a module of program code may be a single instruction, or many instructions, and may even be distributed over several different code segments, among different programs, and across several memory devices. Similarly, operational data may be identified and illustrated herein within modules and may be embodied in any suitable form and organized within any suitable type of data structure. The operational data may be collected as a single data set or may be distributed over different locations including over different storage devices, and may exist, at least partially, merely as electronic signals on a system or network. Where a module or portions of a module are implemented in software, the program code may be stored and/or propagated on in one or more computer readable medium(s).

The computer readable medium may be a tangible computer readable storage medium storing the program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable storage medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store program code for use by and/or in connection with an instruction execution system, apparatus, or device.

The computer readable medium may also be a computer readable signal medium. A computer readable signal medium may include a propagated data signal with program code embodied therein, for example, in baseband or as part of a carrier wave. Such a propagated signal may take any of a variety of forms, including, but not limited to, electrical, electro-magnetic, magnetic, optical, or any suitable combination thereof A computer readable signal medium may be any computer readable medium that is not a computer readable storage medium and that can communicate, propagate, or transport program code for use by or in connection with an instruction execution system, apparatus, or device. Program code embodied on a computer readable signal medium may be transmitted using any appropriate medium, including but not limited to wireline, optical fiber, Radio Frequency (RF), or the like, or any suitable combination of the foregoing

In one embodiment, the computer readable medium may comprise a combination of one or more computer readable storage mediums and one or more computer readable signal mediums. For example, program code may be both propagated as an electro-magnetic signal through a fiber optic cable for execution by a processor and stored on RAM storage device for execution by the processor.

Program code for carrying out operations for aspects of the present invention may be written in any combination of one or more programming languages, including an object oriented programming language such as Python, Ruby, R, Java, Java Script, Smalltalk, C++, C sharp, Lisp, Clojure, PHP or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). The computer program product may be shared, simultaneously serving multiple customers in a flexible, automated fashion.

The computer program product may be integrated into a client, server and network environment by providing for the computer program product to coexist with applications, operating systems and network operating systems software and then installing the computer program product on the clients and servers in the environment where the computer program product will function. In one embodiment software is identified on the clients and servers including the network operating system where the computer program product will be deployed that are required by the computer program product or that work in conjunction with the computer program product. This includes the network operating system that is software that enhances a basic operating system by adding networking features.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

The embodiments may transmit data between electronic devices. The embodiments may further convert the data from a first format to a second format, including converting the data from a non-standard format to a standard format and/or converting the data from the standard format to a non-standard format. The embodiments may modify, update, and/or process the data. The embodiments may store the received, converted, modified, updated, and/or processed data. The embodiments may provide remote access to the data including the updated data. The embodiments may make the data and/or updated data available in real-time. The embodiments may generate and transmit a message based on the data and/or updated data in real-time. The embodiments may securely communicate encrypted data. The embodiments may organize data for efficient validation. In addition, the embodiments may validate the data in response to an action and/or a lack of an action.

Aspects of the embodiments are described below with reference to schematic flowchart diagrams and/or schematic block diagrams of methods, apparatuses, systems, and computer program products according to embodiments of the invention. It will be understood that each block of the schematic flowchart diagrams and/or schematic block diagrams, and combinations of blocks in the schematic flowchart diagrams and/or schematic block diagrams, can be implemented by program code. The program code may be provided to a processor of a general purpose computer, special purpose computer, sequencer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

The program code may also be loaded onto a computer, other programmable data processing apparatus, or other devices to cause a series of operational steps to be performed on the computer, other programmable apparatus or other devices to produce a computer implemented process such that the program code which executed on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods, and computer program products according to various embodiments of the present invention. In this regard, each block in the schematic flowchart diagrams and/or schematic block diagrams may represent a module, segment, or portion of code, which comprises one or more executable instructions of the program code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and program code.

The description of elements in each figure may refer to elements of proceeding figures. Like numbers refer to like elements in all figures, including alternate embodiments of like elements.

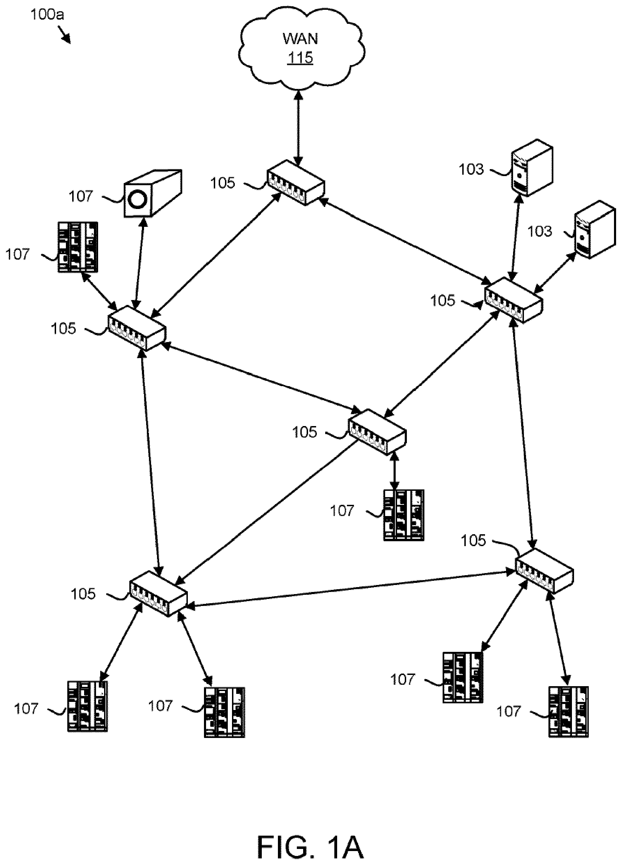

Figure 1A is a schematic block diagram of a network implementation 100a. In the depicted embodiment, the network implementation 100a includes a plurality of servers 103, a plurality of switches 105, and a plurality of stations 107. In one embodiment, the network implementation 100a is connected to a wide area network (WAN) 115. The network implementation 100a may be an industrial automation network. The stations 107 may include sensors, equipment cabinets, motor drives, and the like. Interconnections between the switches 105, stations 107, servers 103, and/or WAN 115 may be Ethernet connections.

When designing and/or upgrading the network implementation 100a, it is useful to preview network performance. Unfortunately, using only calculations of network performance or simulations of network performance typically yields inaccurate predictions. The embodiments execute the network implementation 100a with a combination of models to improve the prediction of network performance as will be described hereafter.

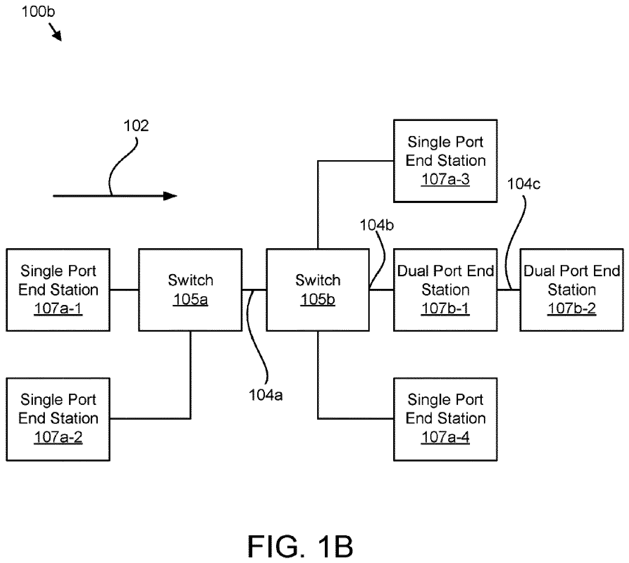

Figure 1B is a schematic block diagram of a network implementation 100b. The network implementation 100b may be a portion of a larger network implementation 100. In the depicted embodiment, a plurality of stations 107 and switches 105 are shown. The stations 107 may be single port end stations 107a or dual port end stations 107b. A direction of data flow 102 is also shown.

When designing the network implementation 100b, it is advantageous to know the utilization 104 throughout the system 100b. For example, a bandwidth utilization 104a at a given station 107 may be 95 percent of capacity, resulting in unacceptable network implementation 100b performance. The embodiments may indicate a fault based on the bandwidth utilization 104a so that the system 100b may be upgraded.

Similarly, a buffer utilization 104b may be 85 percent of capacity at another station 107. The embodiments may indicate an alarm that could result in system parameter changes and/or upgrades. A flow margin utilization 104c may indicate 35 percent flow latency margin and 100% packet delivery. The embodiments may indicate good performance that requires no system changes.

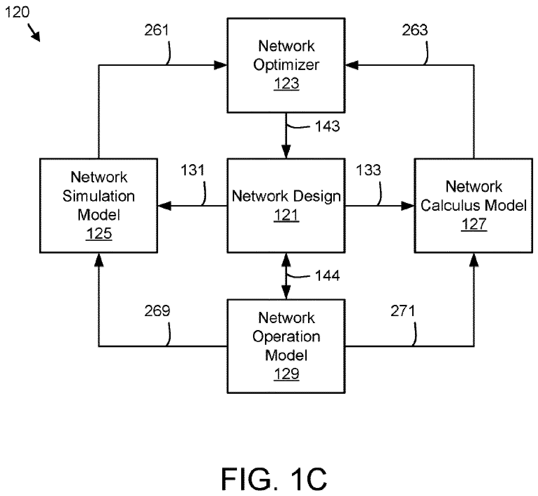

Figure 1C is a schematic block diagram of a prediction system 120. The prediction system 120 may predict the performance of the network implementation 100. In addition, the prediction system 120 may iteratively tune the network implementation 100 to generate a satisfactory network design 121. In the depicted embodiment, the prediction system 120 includes the network design 121, a network simulation model 125, a network calculus model 127, a network optimizer 123, and a network operation model 129.

The prediction system 120 may generate 133 algorithm parameters in a first standard format for the network calculus model 127 for the network implementation 100. The network calculus model 127 may be generated from the algorithm parameters. The network calculus model 127 may model worst-case performance for the network implementation 100.

In addition, the prediction system 120 may generate 131 model parameters in a second standard format for the network simulation model 125 from the design data. The network simulation model 125 may be generated from the model parameters. The network simulation model 125 may model probabilistic performance for the network implementation 100.

The network calculus model 127 may be executed to determine network calculus results 263. The network simulation model 125 may be executed to determine network simulation results 261. The network calculus results 263 and the network simulation results may be employed by the network optimizer 123 to update 143 the design data for the network design 121. Because both the network calculus results 263 and the network simulation results 261 are used in updating 143 the network design 121, the resulting network design 121 becomes more robust and rapidly converges on a cost-effective solution.

In one embodiment, the network operation model 129 is configured with the network implementation 100 from the network design 121. The network operation model 129 may comprise the physical switches 105, stations 107, and interconnections of the network implementation 100, along with the software specified by the network design 121. The network operation model 129 may be operated in run-time. Probabilistic metrics 269 may be measured for the network operation model 129 and used to update the network simulation model 125. As a result, the network simulation model 125 is further enhanced and iteratively converges on a more accurate representation of the network implementation 100.

Worst-case metrics 271 for the network operation model 129 may be measured and used to update the network calculus model 127. As a result, the network calculus model 127 is improved and iteratively converges on a more accurate representation of the network implementation 100.

In addition, probabilistic performance may be modeled for the network implementation 100 by the network operation model 129. Thus, the embodiments rapidly and iteratively improve the network design 121 and the modeling of the network design 121. As a result, parameters including bandwidth utilization 104a, buffer utilization 104b, and flow margin utilization 104c as shown in Figure 1B may be accurately predicted.

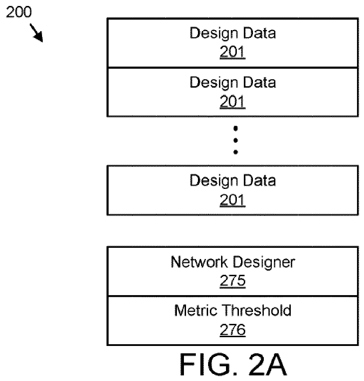

Figure 2A is a schematic block diagram of system data 200. The system data 200 may be used to implement one or more network designs 121. The system data 200 may be organized as a data structure in a memory. In the depicted embodiment, the system data 200 includes design data 201 for a plurality of network implementations 100. Each design data 201 may represent a unique network implementation 100.

In addition, the system data 200 may include a network designer 275. The network designer 275 may be used to generate the design data 201 for a network design 121. In one embodiment, the network designer 275 includes a design wizard interface. In addition, the network designer 275 may include a selection algorithm. The selection algorithm may select an instance of design data 201 based on a heuristic guidance index as will be described hereafter.

In one embodiment, the system data 200 includes a metric threshold 276. The metric threshold 276 may specify whether sufficient metrics have been measured from the network simulation model 125, the network calculus model 127, and/or the network operation model 129.

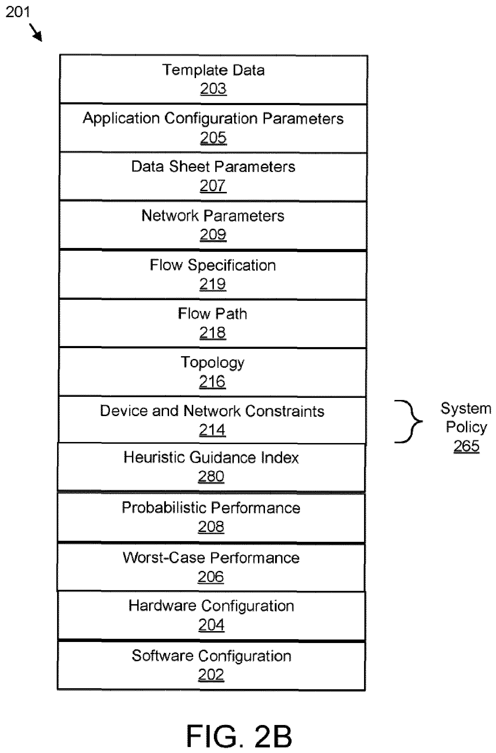

Figure 2B is a schematic block diagram of the design data 201. The design data 201 may define a network implementation 100. The design data 201 may be organized as a data structure in a memory. In the depicted embodiment, the design data 201 includes template data 203, application configuration parameters 205, datasheet parameters 207, network parameters 209, a flow specification 219, a flow path 218, a topology 216, device and network constraints 214, the heuristic guidance index 280, the probabilistic performance 208, the worst-case performance 206, a hardware configuration 204, and the software configuration 202.

The template data 203 may include one or more template libraries for creating a network implementation 100. In one embodiment, the template data 203 may comprise templates for validated network implementations 100. In a certain embodiment, the template data 203 comprises a run-time score for the design data 201 The run-time score may be used to select design data 201 for a subsequent network implementation 100.

The application configuration parameters 205 may specify a packet size, a cyclic data packet interval, a cyclic data bandwidth limits, a motion update cycle, and the like. The datasheet parameters 207 may include parameters for one or more switches 105, stations 107, WAN networks 115, and/or servers 103. In one embodiment, the network parameters 209 include a network bandwidth, a quality of service, a switch port maximum queue buffer, traffic policing rules, forwarding rules, transmission rules, and the like.

The flow specification 219 may be used for real-time and non-real-time traffic modeling. As used herein real-time data, real-time traffic, and/or real-time data flow refer to communicating packets with a minimum specified latency and jitter. As used herein, non-real-time data, non-real-time traffic, and/or non-real-time data flow refer to communicating packets with no minimum latency and jitter. The flow specification 219 may specify traffic on the flow path 218. The flow path 218 may specify a transmission route for flow packets in the network implementation 100.

The topology 216 may specify the layout of the servers 103, switches 105, stations 107, and WAN networks 115 of the network implementation 100. The topology 216 may impact the flow path for the real-time and the non-real time traffic.

The device and network constraints 214 may specify maximum bandwidth, maximum buffer utilization, port maximum queue size, and flow latency and/or jitter margin for each switch 105, station 107, and the network implementation 100. The device and network constraints 214 may include a real-time traffic guarantee and/or a non-real-time traffic guarantee. In one embodiment, the device and network constraints 214 are included in a system policy 265.

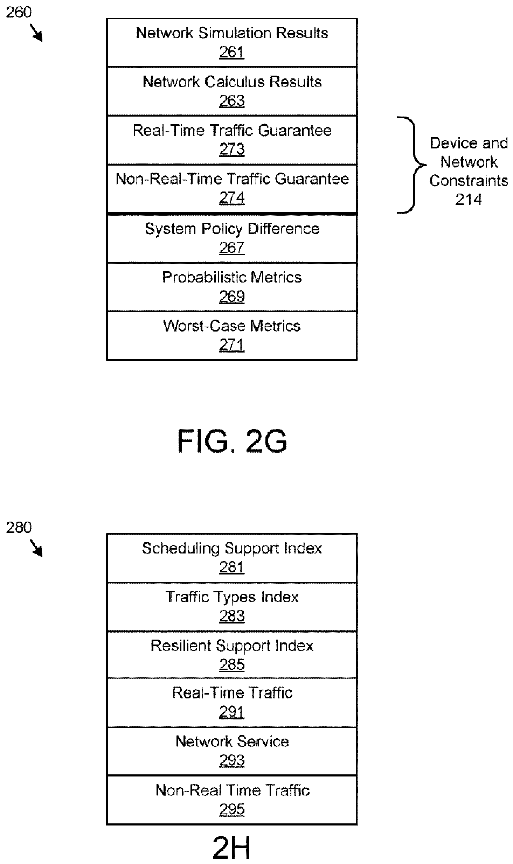

The heuristic guidance index 280 may suggest parameters for the network design 121. The heuristic guidance index 280 is described in more detail in Figure 2H. The probabilistic performance 208 may be modeled for the network implementation 100. In one embodiment, the probabilistic performance is modeled with the network operation model 129. In another embodiment, the probabilistic performance is modeled with the network simulation model 125. The probabilistic performance model 208 may comprise statistical profiles of the bandwidth utilization, buffer utilization, and flow latency and/or jitter margin for the network implementation 100.

In one embodiment, the worst-case performance 206 may be modeled by the network calculus model 127 for the network implementation 100. The worst-case performance 206 may be a worst-performing profile of the bandwidth utilization, buffer utilization, and/or flow latency and/or jitter margin for the network implementation 100.

The hardware configuration 204 may specify the servers 103, the switches 105, and the stations 107 for the network implementation 100. In addition, the hardware configuration 204 may specify interconnections between the servers 103, the switches 105, and the stations 107.

The software configuration 202 may specify software for the servers 103, the switches 105, and the stations 107 for the network implementation 100. The software configuration 202 may specify versions of each software element.

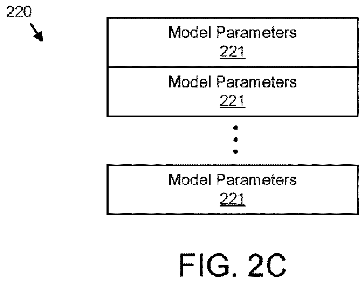

Figure 2C is a schematic block diagram of model data 220. The model data 220 may include model parameters 221 for a plurality of network simulation models 125. The model data 220 may be organized as a data structure in a memory. In one embodiment, each model parameters 221 corresponds to a network design 121 and/or network implementation 100.

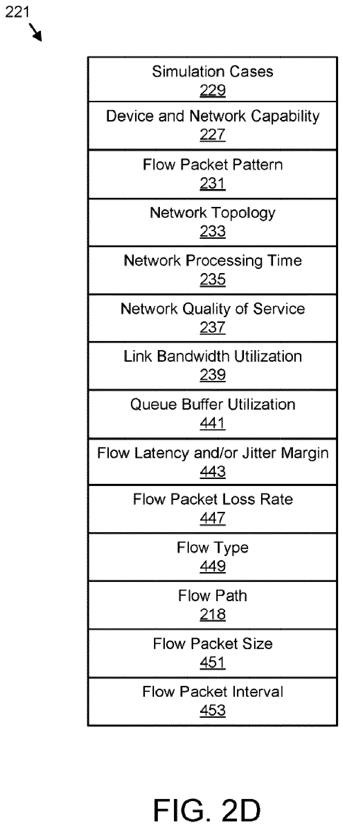

Figure 2D is a schematic block diagram of the model parameters 221. The model parameters 221 may be organized in a second standard format for the network simulation model 125 as shown. The second standard format may support the consolidation of data by the network optimizer 123. As used herein, consolidation refers to the organization of data into a format that is interchangeable between the network optimizer 123, the simulation model 125, and the network operation model 129. The model parameters 221 may further be organized as a data structure in a memory. In the depicted embodiment, the model parameters 221 include simulation cases 229, a device and network capability 227, a flow packet pattern 231, a network topology 233, a network processing time 235, a network quality of service 237, a link bandwidth utilization 239, a queue buffer utilization 441, the flow latency and/or jitter margin 443, a flow packet loss rate 447, a flow type 449, a flow path 218, a flow packet size 451, and a flow packet interval 453. The network implementation 100 may be a common industrial protocol (CIP) network and follow the Open Systems Interconnection (OSI) model as defined on the date of the filing of the present application. The flow type 449 may be a CIP motion flow, a CIP safety flow, a CIP input output (I/O) flow, a CIP explicit messaging flow, or another type of CIP flow.

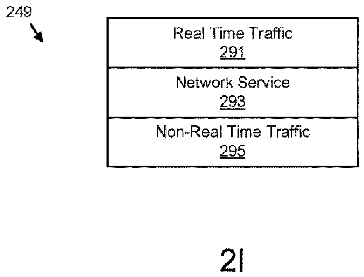

The simulation cases 229 may comprise specific realizations of variant instances schema. The network simulation model 125 may generate simulation cases 229 that are specific realizations of the variant instances schema. In a certain embodiment, the simulation cases 229 are specific realizations of the variant instances schema from algorithm parameters of the network calculus model 127. In one embodiment, the simulation cases 229 are based on the heuristic guidance index 280. The variant instances schema is described hereafter in Figure 2I.

The device and network capability 227 may specify a physical network bandwidth, a queue buffer size for the switches 105, and the like. The flow packet pattern 231 may specify a distribution of flow packets among the servers 103, switches 105, and stations 107 of the network implementation 100. The flow packet pattern 231 may be an input to the flow specification 219.

The network topology 233 may specify an instance of the topology 216 for the network simulation model 125 and/or the network calculus model 127. The network topology 233 may comprise a topology for the servers 103, switches 105, and stations 107 of the network implementation 100. The network processing time 235 may comprise a switch processing time for each switch 105 and a network transmission time for communications between stations 107, switches 105, and the like. The network processing time may impact the flow latency and/or jitter.

The network quality of service 237 may specify a level of service that is to be modeled by the network simulation model 125 and/or the network calculus model 127. In one embodiment, the network quality of service 237 may specify a differentiated services code point (DSCP) value in an Internet protocol (IP) header for one or more flow packets. In another embodiment, the network quality of service 237 specifies a Priority Code Point (PCP) value in a virtual local area network (VLAN) tag. In addition, the network quality of service 237 may specify a switch transmission algorithm. The network quality of service 237 may also specify an allocated bandwidth for a specified flow type 449.

The link bandwidth utilization 239 may specify a maximum allowable bandwidth utilization at servers 103, switches 105, and/or stations 107. The link bandwidth utilization 239 may be a constraint for the network simulation model 125 and/or the network calculus model 127. The minimum of all link bandwidth utilizations may be used as the network bandwidth utilization.

The queue buffer utilization 441 may specify a maximum allowable queue buffer utilization. The queue buffer utilization 441 may be a constraint for the network simulation model 125 and/or the network calculus model 127. The flow latency and/or jitter margin 443 may specify a maximum flow latency and/or jitter margin on a flow path or at a device such as a server 103, a switch 105 and/or a station 107. The flow latency and/or jitter margin 443 may be a constraint for the network simulation model 125 and/or the network calculus model 127.

The flow packet loss rate 447 may specify a maximum loss rate for flow packets. The flow packet loss rate 447 may be a constraint for the network simulation model 125 and/or the network calculus model 127.

The flow type 449 may specify the flow type of the network implementation 100. The flow type 449 may specify a traffic quality of service and may include a DSCP value and/or a PCP value. The flow type 449 may be an input to the flow specification 219. The flow path 218 may specify a transmission route for flow packets in the network implementation 100.

The flow packet size 451 may specify a statistical packet size for flow packets in the flow of the network implementation 100. The flow packet size 451 may be an input to the flow specification 219. The flow packet interval 453 may specify a statistical time between two packets of data flow in the network implementation 100. The flow packet interval 453 may be an input to the flow specification 219.

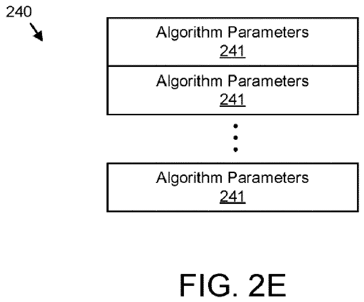

Figure 2E is a schematic block diagram of algorithm data 240. The algorithm data 240 may include algorithm parameters 241 for a plurality of network calculus models 127. The algorithm data 240 may be organized as a data structure in a memory. Each algorithm parameters 241 may correspond to a network design 221 and/or network implementation 100. An algorithm parameter 241 may model a rough granularity of traffic and network service for the network implementation 100.

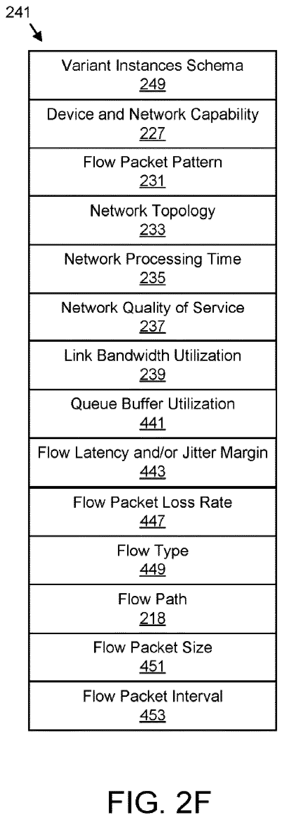

Figure 2F is a schematic block diagram of algorithm parameters 241. The algorithm parameters 241 may be organized in a first standard format for the network calculus model 127. The first standard format may support the consolidation of data by the network optimizer 123. As used herein, consolidation refers to the organization of data into a format that is interchangeable between the network optimizer 123, the calculus model 127, and the network operation model 129. The algorithm parameters 241 may further be organized as a data structure in a memory. In the depicted embodiment the algorithm parameters 241 include the variant instances schema 249, the device and network capability 227, the flow packet pattern 231, the network topology 233, the network processing time 235, the network quality of service 237, the link bandwidth utilization 239, the queue buffer utilization 441, the flow latency and/or jitter margin 443, the flow packet loss rate 447, the flow type 449, the flow path 218, the flow packet size 451, and the flow packet interval 453 The variant instances schema 249 is described hereafter in Figure 2I.

Figure 2G is a schematic block diagram of calculation data 260. The calculation data 260 may be generated by the network simulation model 125, the network calculus model 127, and/or the network operation model 129. The calculation data 260 may be employed by the network optimizer 123 to update 143 the network design 121. In the depicted embodiment, the calculation data 260 includes the network simulation results 261, the network calculus results 263, the real-time traffic guarantee 273, the non-real-time traffic guarantee 274, the system policy difference 267, the probabilistic metrics 269, and the worst-case metrics 271. The real-time traffic guarantee 273 and the non-real-time traffic guarantee 274 may be included in the device and network constraints 214.

The network simulation results 261 may include a bandwidth utilization, a buffer utilization, a latency margin, a jitter margin, and the like for the network simulation model 125. The network calculus results 263 may specify the bandwidth utilization, buffer utilization, latency margin, jitter margin, and the like for the network calculus model 127. The use of the first standard format and the second standard format assures that the bandwidth utilization, buffer utilization, latency margin, and jitter margin from both the network simulation results 261 and the network calculus results 263 are compatible.

The real-time traffic guarantee 273 may specify a minimum level of traffic for real-time modeling of the network implementation 100. The real-time traffic guarantee 273 may be valid for the variant instances schema 249. The non-real-time traffic guarantee 274 may specify a minimum level of traffic for non-real-time modeling of the network implementation 100. The non-real-time traffic guarantee 274 may be valid for the variant instances schema 249.

The system policy difference 267 may record differences between the network calculus results 263, the network simulation results 261, and the system policy 265. The system policy difference 267 may be used to update the design data 201 for the network design 121 and/or the network implementation 100.

The probabilistic metrics 269 may statistically describe the operation of the network implementation 100. In one embodiment, the probabilistic metrics 269 statistically describe the bandwidth utilization, buffer utilization, latency margin, jitter margin, packet loss rate, and the like. The probabilistic metrics 269 may be generated by the network operation model 129. The worst-case metrics 271 may describe the worst-case operation of the network implementation 100. In one embodiment, the worst-case metrics 270 statistically describe the bandwidth utilization, buffer utilization, latency margin, jitter margin, packet loss rate, and the like. The worst-case metrics 271 may be generated by the network operation model 129.

Figure 2H is a schematic block diagram of the heuristic guidance index 280. Elements of the network guidance index 280 may be presented to the user and/or administrator to suggest parameters for the network implementation 100. The heuristic guidance index 280 may also be used to automatically generate parameters for the network implementation 100. The heuristic guidance index 280 may be organized as a data structure in a memory. In the depicted embodiment, the heuristic guidance index 280 includes a scheduling support index 281, a traffic types index 283, a resilient support index 285, real-time traffic 291, network service 293, and non-real-time traffic 295.

The scheduling support index 281 may guide the network design 121 and/or network implementation 100 by suggesting whether a scheduling function is supported. The traffic types index 283 may guide the network design 121 and/or network implementation 100 by suggesting traffic types for specified application traffic in the network implementation 100. The resilient support index 285 may guide the network design 121 and/or network implementation 100 by suggesting the high resilience, high redundancy, and/or high robustness approaches for specific application traffic in the network implementation 100.

The real-time traffic 291, network service 293, and non-real-time traffic 295 may each specify mathematical representations of the network implementation 100, The real-time traffic 291 may specify a mathematical representation of real-time traffic in the network implementation 100. The non-real-time traffic 295 may specify a mathematical representation of non-real-time traffic in the network implementation 100. The network service 293 may specify a mathematical representation of network service capability for the network implementation 100.

Figure 2I is a schematic block diagram of the variant instances schema 249. The variant instances schema 249 may comprise mathematical representations of the network implementation 100. The variant instances schema 249 may be organized as a data structure in a memory. In the depicted embodiment, the variant instances schema 249 includes the real-time traffic 291, the network service 293, and the non-real-time traffic 295. In one embodiment, instances of one or more of the real-time traffic 291, the network service 293, and the non-real-time traffic 295 are excluded from the variant instances schema 249. The variant instances schema 249 may be generated by the network calculus model 127 In one embodiment, the variant instances schema 249 are generated based on the design data 201.

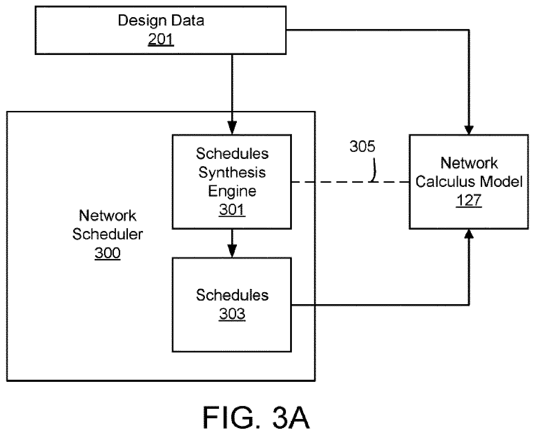

Figure 3A is a schematic block diagram of a network scheduler 300. The network scheduler 300 may generate schedules of flow packet transmission. The network scheduler 300 may be embodied in the network design 121. In the depicted embodiment, a schedules synthesis engine 301 receives the design data 201.

The schedules synthesis engine 301 may generate schedules 303 of packet transactions for the network calculus model 127, and/or network simulation model 125. The schedules synthesis engine 301 may employ one or more algorithms to generate the schedules 303. The network scheduler 300 may provide the schedules 303 to the network calculus model 127. In one embodiment, the schedules synthesis engine 301 is linked 305 to the network calculus model 127. The network calculus model 127 may assist the network scheduler 300 to synthesize network schedules.

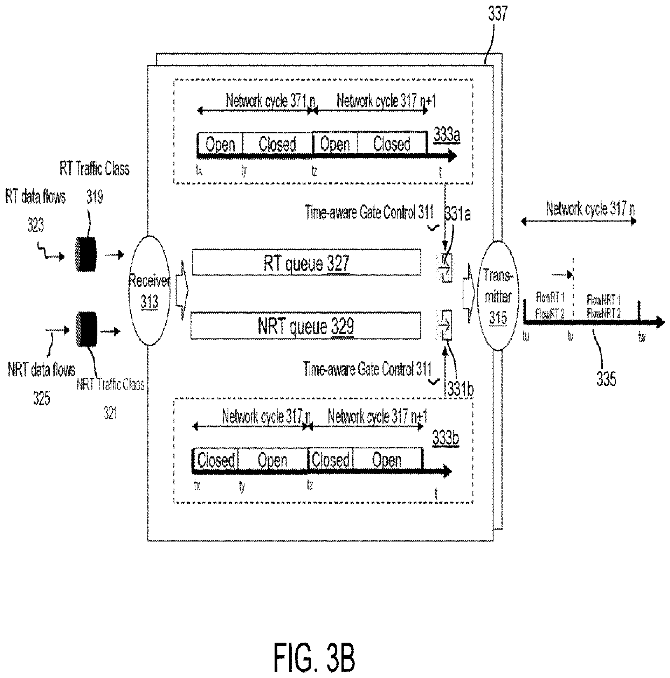

Figure 3B is a block diagram of time aware scheduling. The time aware scheduling may be performed by a switch 105. In the depicted embodiment, real-time data flows 323 comprising real-time traffic classes 319 and non-real-time data flows 325 comprising non-real-time traffic classes 321 are received at a receiver 313 of a shaper 337. The shaper 337 may be a simplified forwarding fabric of a switch 105. The real-time data flows 323 may be stored in a real-time queue 327. The non-real-time data flows 325 may be stored in a non-real-time queue 329. The real-time data flows 323 and non-real-time data flows 325 are released from the real-time queue 327 and the non-real-time queue 329 respectively by a time-aware gate control 311.

In the depicted embodiment, two network cycles 317n/n+1 are shown with sub cycles tx, ty, tz and a current sub cycle. The time-aware gate control 311 may schedule opening either the real-time queue 327 or the non-real-time queue 329 to a transmitter 315. The schedule may be based on the arrival deadline of the real-time data flows 323 at a destination station 107 and/or server 103. In the depicted embodiment, the time-aware gate control 311 schedules alternating between opening the real-time queue 327 and the non-real-time queue 329 to the transmitter 315. As a result, a plurality of real-time data flows 323 are communicated from the transmitter 315 in sub cycle tu and a plurality of non-real-time data flows 325 are communicated from the transmitter 315 in sub cycle tv. However, the time aware gate controller 311 may increase opening the real-time queue 327 to the transmitter 315 to assure that arrival deadlines for the real-time data flows 323 are met. Thus, data flows are scheduled based on the real-time traffic class 319 and the non-real-time traffic class 321.

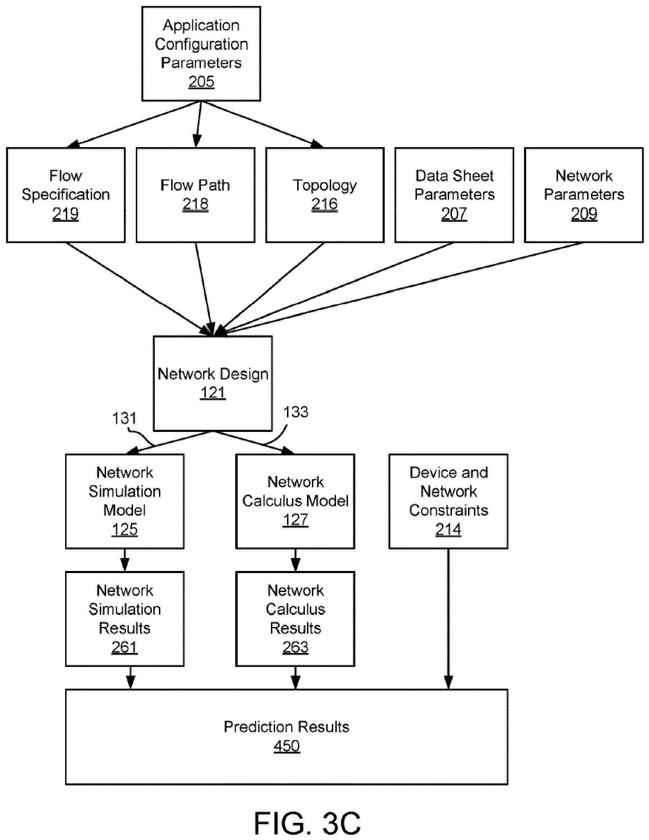

Figure 3C is a schematic flow chart diagram of predicting performance. In the depicted embodiment, the application configuration parameters 205 are used to define the flow specification 219, the flow path 218, and the topology 216. The network designer 275 may employ the application configuration parameters 205 to define the flow specification 219, the flow path 218, and the typology 216.

The network design 121 may be created from the flow specification 219, the flow path 218, the topology 216, the datasheet parameters 207, and/or the network parameters 209. The network simulation model 125 is generated 131 from the network design 121. In addition, the network calculus model 127 is generated 133 from the network design 121. The network simulation model 125 is executed to determine the network simulation results 261. In addition, the network calculus model 127 is executed to determine the network calculus results 263. The network simulation results 261 and network calculus results 263 are compared against the device and network constraints 214 to generate prediction results 450 for the network implementation 100. The prediction results 450 may be for key performance indicators selected from the group consisting of bandwidth utilization, buffer utilization, latency margin, jitter margin, and packet loss rate. For example, the key performance indicators for real-time data flows 323 may be a latency of 100 microsecond (µs), a jitter of 100 nanoseconds (ns), and zero percent packet loss. In addition, the key performance indicators for non-real-time data flows 325 may be a latency of 10 millisecond (ms), no jitter requirement, and a 0.001 percent packet loss.

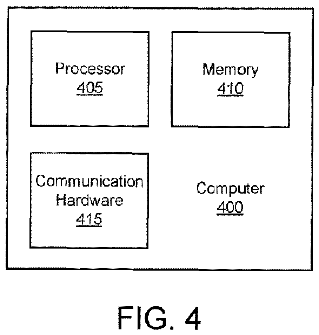

Figure 4 is a schematic block diagram of a computer 400. The computer 400 may be embodied in the servers 103, switches 105, and/or stations 107. In the depicted embodiment, the computer 400 includes a processor 405, a memory 410, and communication hardware 415. The memory 410 may include a semiconductor storage device, a hard disk drive, and optical storage device, or combinations thereof The memory 410 may store code and/or data. The processor 405 may execute the code and/or process the data. The communication hardware 415 may communicate with other devices.

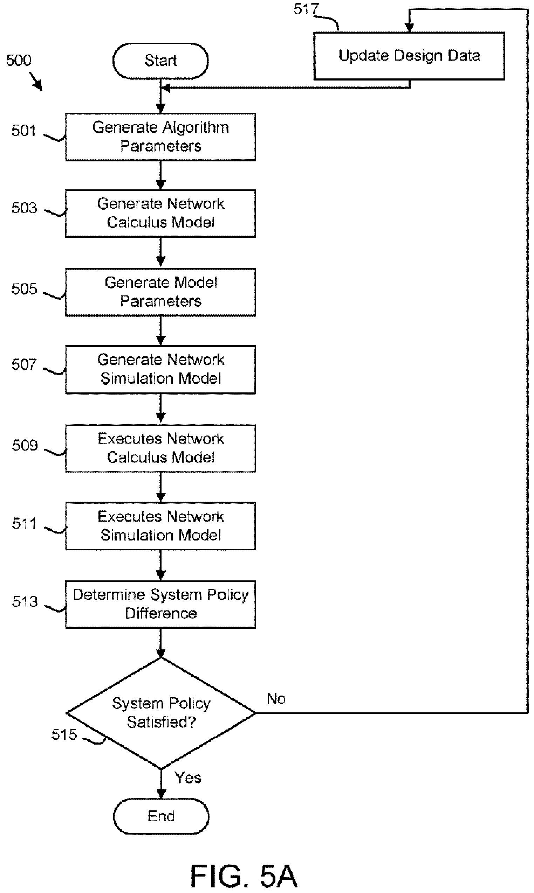

Figure 5A is a schematic flow chart diagram of an offline network prediction method 500. The method 500 may model the network design 121 offline using the network simulation model 125 and the network calculus model 127. The method 500 may further update the design data 201 for the network design 121. The method 500 may be performed by one or more processors 405 of the prediction system 120.

The method 500 starts, and in one embodiment, the processor 405 generates 501 the algorithm parameters 241. The algorithm parameters 241 may be generated 501 in the first standard format. For example, the design data 201 may be modified to the first standard format shown in Figure 2F. In one embodiment, the algorithm parameters 241 are generated from the design data 201 for the network implementation 100. In addition, the algorithm parameters 241 may be generated 501 for the network calculus model 127.

The processor 405 may generate 503 the network calculus model 127 from the algorithm parameters 241. The network calculus model 127 may model worst-case performance for the network implementation 100.

The processor 405 may generate 505 the model parameters 221. The model parameters 221 may be generated 505 in the second standard format. For example, the design data 201 may be modified to the second standard format shown in Figure 2D. The model parameters 221 may be generated 505 from the design data 201 for the network implementation 100. In addition, the model parameters 221 may be generated 505 for the network simulation model 125.

The processor 405 may generate 507 the network simulation model 125 from the model parameters 221. The network simulation model 125 may model probabilistic performance for the network implementation 100.

The processor 405 may execute 509 the network calculus model 127 to determine the network calculus results 263. In addition, the processor 405 may execute 511 the network simulation model 125 to determine the network simulation results 261.

The processor 405 may determine 513 the system policy difference 267 between the network calculus results 263, the network simulation results 261, and the system policy 265. In one embodiment, the system policy difference 267 includes the difference between elements of the network calculus results 263 and the network simulation results 261. In addition, the system policy difference 267 may include the difference between elements of the network calculus results 263 and the system policy 265. The system policy difference 267 may include the difference between elements of the network simulation results 261 and the system policy 265.

In one embodiment, the system policy difference 267 includes elements of the network simulation results 261 and/or the network calculus results 263 that do not satisfy the system policy 265. In a certain embodiment, the system policy difference 267 includes only elements where both the network simulation results 261 and the network calculus results 263 do not satisfy the system policy 265.

In one embodiment, the system policy difference 267 is determined 513 based on Table 1 for corresponding elements of the network calculus results 263, the network simulation results 261, and the system policy 265. The system policy 265 element may be without an adjusting margin, wherein the system policy 265 element cannot be automatically changed and/or adjusted. In addition, the system policy 265 element may be with an adjusting margin, wherein the system policy 265 element may be automatically upgraded or downgraded to conform to the network simulation results 261 and/or network calculus results 263.

**Table 1**

| Simulation results element | Calculus results element | System policy element | System policy difference element |
|---|---|---|---|
| Satisfies system policy element | Satisfies system policy element | Without adjusting margin | No Entry |
| Does not satisfy system policy element | Satisfies system policy element | Without adjusting margin | Simulation results element |
| Satisfies system policy element | Does not satisfy system policy element | Without adjusting margin | Calculus results element |
| Exceeds system policy element | Exceeds system policy element | With adjusting margin | System policy element |
| Does not exceed system policy element | Exceeds system policy element | With adjusting margin | Simulation results element |
| Exceeds system policy element | Does not exceed system policy element | With adjusting margin | Calculus results element |

The processor 405 determines 515 if the system policy 265 is satisfied. If the system policy 265 is satisfied, the method 500 ends. If the system policy 265 is not satisfied, the processor 405 may update 517 the design data 201 and loop to generate 501 the algorithm parameters 241. Updating 517 the design data 201 may tune the network implementation 101. The design data 201 may be updated 517 based on the system policy difference 267. In one embodiment, the heuristic guidance index 280 is used to automatically make changes to the network design 121 to update the design data 201. In addition, the heuristic guidance index 280 may be presented to a user and/or administrator. The user and/or administrator may make changes to the design data 201 to update 517 the design data 201. As a result, the design data 201 and/or network design 121 may be iteratively updated 517 until the system policy 265 is satisfied. In one embodiment, satisfying the system policy 265 verifies the design data 201 and/or the network design 121.

The first and second standard formats are used to generate network calculus model 127 and network simulation model 125 that each efficiently and effectively model different aspects of the network design 121. The network optimizer 123 determines a system policy difference 267 from network simulation results 261 and the network calculus results 263 as compared with each other and the system policy 265. Thus, deviations from the system policy 265 are more easily discovered, allowing the network optimizer 123 to update the network design 121.

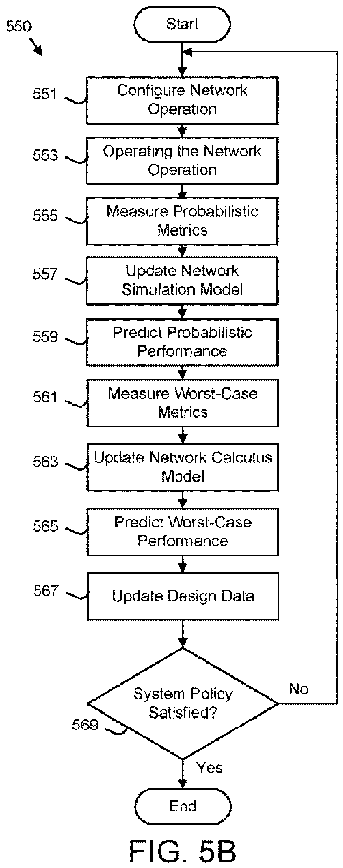

Figure 5B is a schematic flow chart diagram of an online network prediction method 550. The method 550 may model the network design 121 online using the network operation model 129. The method 550 may be performed by one or more processors 405 of the prediction system 120.

The method 550 starts, and in one embodiment, the processor 405 configures 551 the network operation model 129 with the network implementation 100. In one embodiment, the processor 405 provisions the network operation model 129 with servers 103, switches 105, and stations 107 specified by the hardware configuration 204 of the design data 201. In addition, the processor 405 may provision the network operation model 129 with software specified by software configuration 202 of the design data 201.

The processor 405 may operate 553 the network operation model 129 in run-time. In one embodiment, the network operation model 129 generates and transfers traffic including real-time data flows 323 and non-real-time data flows 325 based on the design data 201, the network implementation 100, the flow specification 219, the flow path 218, and/or the typology 216.

The processor 405 may measure 555 the probabilistic metrics 269 for the network operation model 129. The probabilistic metrics 269 may statistically describe the operation of the network implementation 100 In one embodiment, the processor 405 records a statistical model of the bandwidth utilization, buffer utilization, and flow latency and/or jitter margin for the servers 103, switches 105 and/or the stations 107 of the network operation model 129

The processor 405 may further update 557 the network simulation model 125 based on the probabilistic metrics 269. The probabilistic metrics 269 may expand the instances of variant instances schema 249 in the simulation cases 229. In one embodiment, the model parameters 221 for the network simulation model 125 are updated 557 based on the probabilistic metrics 269. The model parameters 221 may be updated 557 to match the probabilistic metrics 269.

The processor 405 may predict 559 the probabilistic performance 208 for the network implementation 100 by executing the updated network simulation model 125.

The processor 405 may measure 561 the worst-case metrics 271 for the network operation model 129. In one embodiment, the processor 405 records the worst performing instance of the bandwidth, buffer utilization, flow latency and/or jitter margins 443, latency, jitter, and packet loss rate for the servers 103, switches 105 and/or stations 107 of the network operation model 129.

The processor 405 may update 563 the network calculus model 127 based on the worst-case metrics 271. In one embodiment, the algorithm data 241 is adjusted to match the worst-case metrics 271.

The processor 405 may predict 565 the worst-case performance 206 for the network implementation 100 by executing the updated network calculus model 127.

In one embodiment, the processor 405 updates 567 the design data 201 based on the probabilistic metrics 269 and/or the worst-case metrics 271. For example, the probabilistic performance 208 and worst-case performance 206 may be updated based on the probabilistic metrics 269 and worst-case metrics 271. The updating 567 of the design data 201 may further tune the network design 121 and/or network implementation 100.

The processor 405 may determine 569 whether the system policy 265 is satisfied. If the system policy 265 is satisfied, the method 550 ends. If the system policy 265 is not satisfied, the processor 405 may loop to configure 551 the network operation model 129 based on the updated design data 201.

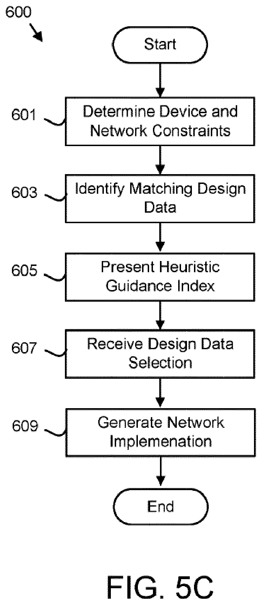

Figure 5C is a schematic flow chart diagram of a design method 600. The method 600 may generate the network implementation 100 based on the design data 201. The method 600 may be performed by one or more processors 405 of the prediction system 120. In addition, the method 600 may be performed by the network designer 275 and/or a design wizard interface of the network designer 275 executing on the processors 405. For example, the network designer 275 may present a plurality of screens based on the template data 203 that allows a user and/or administrator to select design data 201 for the network design 121.

The method 600 starts, and in one embodiment, the processor 405 determines 601 the device and network constraints 214 for the network implementation 100. In one embodiment, the processor 405 determines 601 the maximum bandwidth, maximum buffer utilization, and/or flow latency and/or jitter margin for the network implementation 100. The device and network constraints 214 may be determined 601 based on the flow specification 219, the flow path 218, the network topology 216, the datasheet parameters 207, and/or the network parameters 209.

The processor 405 may identify 603 matching design data 201 for the device and network constraints 214. In one embodiment, the processor 405 searches the system data 200 for design data 201 that matches the device and network constraints 214. A plurality of design data 201 may match the device and network constraints 214.

In one embodiment, the processor 405 identify 603 the matching design data 201 based on the run-time score from the template data 203. For example, the processor 405 may identify 603 matching design data 201 that satisfies the device and network constraints 214 and has the highest run-time score.

The processor 405 may present 605 the heuristic guidance index 280 of the matching design data 201 selected from the system data 200. The heuristic guidance index 280 for a plurality of design data 201 may be presented 605, The heuristic guidance index 280 may be presented 605 to a user and/or administrator. The user and/or administrator may select an instance of design data 201 from the plurality of design data 201 based on the heuristic guidance index 280.

In addition, the heuristic guidance index 280 may be presented 605 to the selection algorithm. The selection algorithm may select an instance of design data 201 from the plurality of design data 201 based on the heuristic guidance index 280 for the instance of design data 201.

The processor 405 may receive 607 the selection of design data 201. The selection of design data 201 may be received 607 from the user and/or administrator. In addition, the selection of design data 201 may be received 607 from the selection algorithm.

The processor 405 may generate 609 the network implementation 100 based on the selected design data 201 and the method 600 ends. In one embodiment, the processor 405 provisions the network implementation 100 and/or network operation model 129 with servers 103, switches 105, and/or stations 107 specified by the hardware configuration 204 of the design data 201. In addition, the processor 405 may provision the network implementation 100 and/or network operation model 129 with software specified by software configuration 202 of the design data 201.

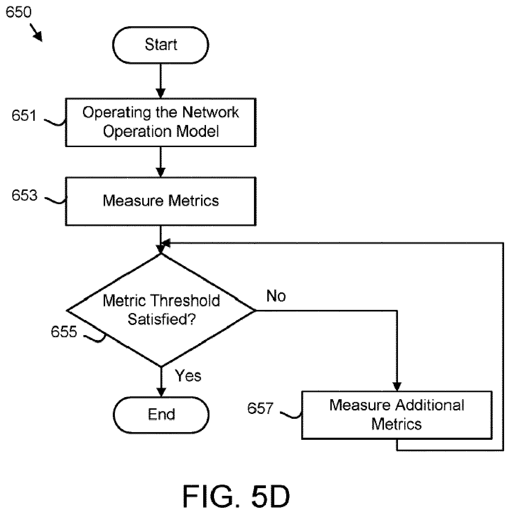

Figure 5D is a schematic flow chart diagram of a metric measurement method 650. The method 650 may measure metrics for the network design 121 and measure additional metrics if a metric threshold 276 is not satisfied. The method 650 may be performed by one or more processors 405 of the prediction system 120.

The method 650 starts, and in one embodiment, the processor 405 operates 651 the network operation model 129. In addition, the processor 405 may operate the network simulation model 125 and/or the network calculus model 127.

The processor 405 may measure 653 one or more metrics from the network operation model 129, the network simulation model 125, and/or the network calculus model 127. The metrics may be selected from the group consisting of the network simulation results 261, the network calculus results 263, the probabilistic metrics 269, and the worst-case metrics 271.

The processor 405 may determine 655 whether the metric threshold 276 is satisfied. If the metric threshold 276 is satisfied, the method 650 ends. If the metric threshold 276 is not satisfied, the processor 405 measures 657 additional metrics until the metric threshold 276 is satisfied.

### Problem/Solution

Network implementations 100 are often provisioned in industrial automation settings. Unfortunately, it is difficult to know if the network implementation 100 will have sufficient performance. The embodiments support the calculation and/or determination of the network implementation 100 using a combination of the network calculus model 127, the network simulation model 125, and/or the network operation model 129. Each of the network calculus model 127, the network simulation model 125, and the network operation model 129 allows a different aspect of the network implementation 100 to be accurately calculated and/or determined, providing more accurate prediction results 450 of performance.

The embodiments further determine the system policy difference 267 and update the design data 201 for the network implementation 100 based on the system policy difference 267. As a result, the embodiments support the iterative tuning and improvement of the design data 201 and the network implementation 100 for a specific network design 121.

This description uses examples to disclose the invention and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method comprising:
generating, by use of a processor, algorithm parameters in a first standard format for a network calculus model from design data for a network implementation;
generating the network calculus model from the algorithm parameters, wherein the network calculus model models worst-case performance for the network implementation;
generating model parameters in a second standard format for a network simulation model from the design data;
generating the network simulation model from the model parameters, wherein the network simulation model models probabilistic performance for the network implementation;
executing the network calculus model to determine network calculus results;
executing the network simulation model to determine network simulation results;
determining a system policy difference between the network calculus results, the network simulation results, and the system policy; and
updating the design data based on the system policy difference.

2. The method of claim 1, at least one of:
wherein the design data is iteratively updated until the system policy is satisfied and wherein satisfying the system policy verifies the design data;
the method further comprising:
determining device and network constraints for the network implementation;
identifying matching design data for the device and network constraints;
presenting a heuristic guidance index of the matching design data;
receiving a selection of matching design data; and
generating the network implementation based on the selected design data; or
wherein the network calculus model assists a network scheduler to synthesize network schedules.

3. The method of claim 1 or 2, wherein the system policy comprises device and network constraints and wherein the device and network constraints comprise a real-time traffic guarantee and/or a non-real-time traffic guarantee.

4. The method of claim 3, wherein the network simulation model generates simulation cases that are specific realizations of variant instances schema and the real-time traffic guarantee is valid for the variant instances schema.

5. The method of claim 4, wherein the variant instances schema is generated based on a heuristic guidance index of the design data and the simulation cases are further based on the heuristic guidance index.

6. The method of one of claims 1 to 5, the method further comprising:
configuring a network operation model with the network implementation;
operating the network operation model in run-time;
measuring probabilistic metrics for the network operation model;
updating the network simulation model based on the probabilistic metrics;
predicting probabilistic performance for the network implementation;
measuring worst-case metrics for the network operation model;
updating the network calculus model based on the worst-case metrics; and
predicting worst-case performance for the network implementation.

7. The method of claim 6, the method further comprising updating the design data based on the probabilistic metrics and the worst-case metrics.

8. The method of one of claims 1 to 7, wherein the design data comprises template data, application configuration parameters, data sheet parameters, network parameters, a flow specification, a flow path, a topology, and device and network constraints.

9. The method of claim 8, wherein the template data comprises a run-time score for the design data, and the run-time score is used to select design data for a subsequent network implementation.

10. An apparatus comprising:
a processor;
a memory storing code executable by the processor to perform:
generating algorithm parameters in a first standard format for a network calculus model from design data for a network implementation;
generating the network calculus model from the algorithm parameters, wherein the network calculus model models worst-case performance for the network implementation;
generating model parameters in a second standard format for a network simulation model from the design data;
generating the network simulation model from the model parameters, wherein the network simulation model models probabilistic performance for the network implementation;
executing the network calculus model to determine network calculus results;
executing the network simulation model to determine network simulation results;
determining a system policy difference between the network calculus results, the network simulation results, and a system policy; and
updating the design data based on the system policy difference.

11. The apparatus of claim 10, at least one of:
wherein the design data is iteratively updated until the system policy is satisfied and wherein satisfying the system policy verifies the design data; or
the processor further:
configuring a network operation model with the network implementation;
operating the network operation model in run-time;
measuring probabilistic metrics for the network operation model;
updating the network simulation model based on the probabilistic metrics;
predicting probabilistic performance for the network implementation;
measuring worst-case metrics for the network operation model;
updating the network calculus model based on the worst-case metrics; and
predicting worst-case performance for the network implementation.

12. The apparatus of claim 10 or 11, wherein the system policy comprises device and network constraints and wherein the device and network constraints comprise a real-time traffic guarantee and/or a non-real-time traffic guarantee.

13. The apparatus of claim 12, wherein the network simulation model generates simulation cases that are specific realizations of variant instances schema and the real-time traffic guarantee is valid for the variant instances schema.

14. The apparatus of claim 13, wherein the variant instances schema is generated based on a heuristic guidance index of the design data and the simulation cases are further based on the heuristic guidance index.

15. A computer program product comprising a non-transitory computer readable storage medium having program code embodied therein, the program code readable/executable by a processor to perform the method of one of claims 1 to 9.
